# EUROPEAN PATENT APPLICATION

(11) **EP 1 864 946 A2**
(43) Date of publication of application: **12.12.2007**
(21) Application number: 07010795.8
(22) Date of filing: 31.05.2007
(51) Int. Cl.: C01B 7/01, C01B 13/10

(54) **Oxidizing gas pressurization system**

(30) Priority: 07.06.2006 KR 20060051141; 25.01.2007 KR 20070007999
(71) Applicant: Michigan Technology Co., Ltd., Nam-gu Ulsan gwangyoksi (KR)
(72) Inventor: Lee, Chang-Jin, Ulsan (KR); Lee, Byoung-Ho, Ulsan (KR); Kim, Sung-Hyuk, Haeundae-gu Busan (KR)
(74) Representative: Grünecker, Kinkeldey, Stockmair & Schwanhäusser Anwaltssozietät

(57) **Abstract**

An oxidizing gas pressurization system capable of supplying protective cooling water into an oxidizing gas pressurization unit such that the protective cooling water serves as a protective film against strong oxidizing power and cools the heat generated in the pressurization unit is disclosed. The oxidizing gas pressurization system for pressurizing and supplying an oxidizing gas such as ozone and chlorine includes an oxidizing gas storage unit, an oxidizing gas pressurization unit for pressurizing the oxidizing gas supplied from the oxidizing gas storage unit at a high pressure and discharging the oxidizing gas, and a cooling water supply unit for supplying protective cooling water serving as a protective film against the oxidizing pas supplied into the oxidizing gas pressurization unit.

## Description

### BACKGROUND OF THE INVENTION

### Field of the Invention

The present invention relates to a system for pressurizing and supplying an oxidizing gas, and more particularly to an oxidizing gas pressurization system capable of supplying protective cooling water into an oxidizing gas pressurization unit such that the protective cooling water serves as a protective film against strong oxidizing power and cools the heat generated in the pressurization unit.

### Description of the Related Art

Various water treatment methods have been used for advanced water purification, sewage treatment, industrial waste water treatment, soil waste water treatment, seepage water treatment. In a general chemical oxidation treatment method, an oxidizing gas such as ozone and chlorine, ultraviolet (UV) rays, a single oxidizing agent such as potassium permanganate or the like is used for complete oxidation into carbon dioxide (CO₂) and water. However, the general chemical oxidation treatment method has a limit in performing water treatment and requires a lot of cost.

Recently, an advanced oxidation process (AOP) has been intensively studied as a chemical oxidation method. In the advanced oxidation process (AOP), organic substances in water are decomposed due to hydroxide (-OH) radicals generated as intermediate products.

The advanced oxidation process (AOP) is a complex oxidation method in which ozone, hydrogen peroxide, a photocatalyst, ultraviolet rays and the like are combined with each other to increase oxidizing power.

The complex oxidation method depends on strong oxidizing power of the hydroxide (-OH) radicals generated as intermediate products instead of the effect of the oxidizing agent directly injected. The complex oxidation method is an economic and efficient method compared to a method using a single oxidizing agent. The complex oxidation method intends to maximize generation of hydroxide (-OH) radicals.

The oxidizing gas such as ozone or chlorine used in the advanced oxidation process is pressurized at a specified pressure and then supplied since a high-density oxidizing gas has strong oxidizing power.

The oxidizing gas may be pressurized and supplied using a pump, for example, a Teflon diaphragm pump. In the Teflon diaphragm pump, the pressurization is performed by expansion and contraction of Teflon. Even though Teflon is expanded or contracted at a high speed, the amount of pressurized gas is very small. Further, high-speed movement causes severe mechanical abrasion and an increase in temperature. Thus, in case of using ozone, the ozone is decomposed due to heat in the pressurization process.

On the other hand, the oxidizing gas such as ozone and chlorine is injected into water using an injector, for example, a venturi injector. The venturi injector passes water through a venturi section having a small cross sectional area at a high speed. In this case, a pressure reduction is generated due to kinetic energy in the venturi section, whereby the oxidizing gas is injected.

In case that an ozone gas is pressurized using the injector, a ratio of gas to water may be decreased according to the pressurization pressure. Accordingly, it is difficult to inject a sufficient amount of ozone gas. Generally, although it is possible to pressurize ozone at a pressure of 3 atm or less, energy loss is large. It is impossible to pressurize ozone at a pressure of 3 atm or more.

### SUMMARY OF THE INVENTION

Therefore, the present invention has been made in view of the above problems, and it is an object of the present invention to provide an oxidizing gas pressurization system capable of supplying protective cooling water into an oxidizing gas pressurization unit such that the protective cooling water serves as a protective film on the inner surface of the oxidizing gas pressurization unit in contact with piston rings, thereby preventing the piston rings from being oxidized due to strong oxidizing power of the oxidizing gas pressurized at a high pressure.

Further, it is another object of the present invention to provide an oxidizing gas pressurization system capable of supplying protective cooling water to cool the heat generated due to reciprocation of the piston in the oxidizing gas pressurization unit, thereby preventing ozone from being decomposed due to heat.

In accordance with an aspect of the present invention, there is provided an oxidizing gas pressurization system for pressurizing and supplying an oxidizing gas such as ozone and chlorine comprising: an oxidizing gas storage unit; an oxidizing gas pressurization unit for pressurizing the oxidizing gas supplied from the oxidizing gas storage unit at a high pressure and discharging the oxidizing gas; and a cooling water supply unit for supplying protective cooling water serving as a protective film against the oxidizing pas supplied into the oxidizing gas pressurization unit.

The oxidizing gas pressurization unit may include a main body having a gas inlet port and a gas outlet port; a piston which reciprocates in the main body to pressurize a fluid; piston rings disposed at side portions of the piston; and a piston driving device for controlling reciprocation of the piston.

The piston rings may be made of fluorine resin.

In accordance with an embodiment of the present invention, the oxidizing gas storage unit may include an oxidizing gas storage tank, a pressure sensor, a safety valve and a gas decomposing device (not shown) such that an inner pressure of the oxidizing gas storage tank is detected by the pressure sensor and the inner pressure of the oxidizing gas storage tank is controlled by controlling a flow rate of the oxidizing gas transferred into the oxidizing gas pressurization unit and opening/closing of the safety valve based on detection results.

In accordance with another embodiment of the present invention, the oxidizing gas storage unit may include an oxidizing gas storage tank, a pressure sensor, a safety valve and a gas decomposing device (not shown) such that an inner pressure of the oxidizing gas storage tank is detected by the pressure sensor and the inner pressure of the oxidizing gas storage tank is controlled by controlling a gas supply into the oxidizing gas storage tank and opening/closing of the safety valve based on detection results.

### BRIEF DESCRIPTION OF THE DRAWINGS

The above and other objects, features and other advantages of the present invention will be more clearly understood from the following detailed description taken in conjunction with the accompanying drawings, in which:
FIG. 1 shows a configuration of an oxidizing gas pressurization system according to the present invention;
FIG. 2 shows an enlarged view of an oxidizing gas storage unit included in the oxidizing gas pressurization system shown in FIG. 1;
FIG. 3 shows an enlarged view of an oxidizing gas pressurization unit included in the oxidizing gas pressurization system shown in FIG. 1; and
FIG. 4 shows an enlarged view of a cooling water supply unit included in the oxidizing gas pressurization system shown in FIG. 1.

### DETAILED DESCRIPTION OF THE PREFERRED EMBODIMENTS

Hereinafter, preferred embodiments of the present invention will now be described in detail with reference to the accompanying drawings.

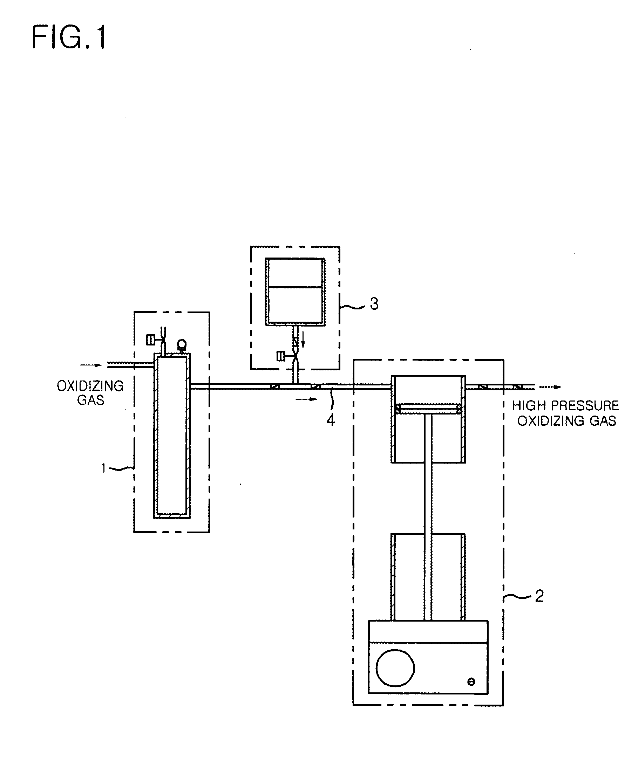

FIG. 1 shows a configuration of an oxidizing gas pressurization system according to the present invention. The oxidizing gas pressurization system for pressurizing and supplying an oxidizing gas such as ozone or chlorine includes an oxidizing gas storage unit 1, an oxidizing gas pressurization unit 2 and a cooling water supply unit 3.

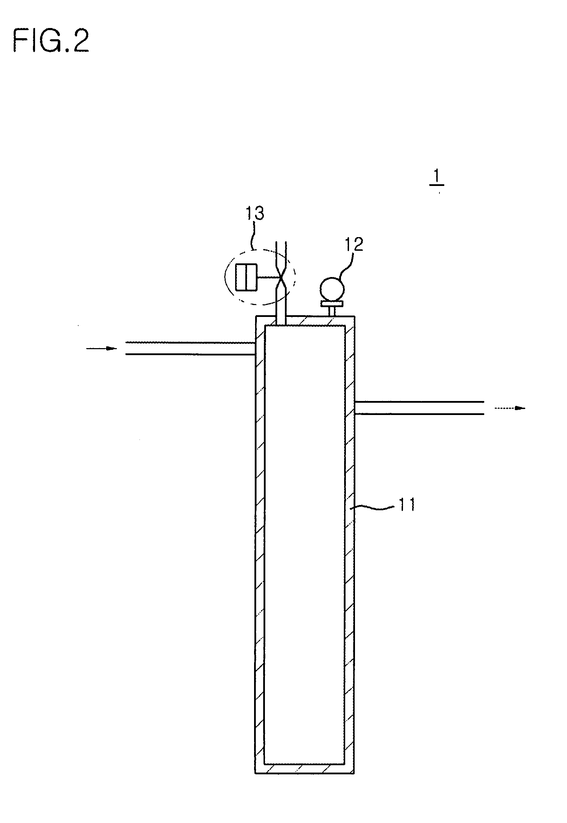

FIG. 2 shows a configuration of an oxidizing gas storage unit included in the oxidizing gas pressurization system shown in FIG. 1. The oxidizing gas storage unit 1 is supplied with an oxidizing gas such as ozone or chlorine from a gas supply unit (not shown) to store the oxidizing gas. The oxidizing gas storage unit 1 controls a pressurization rate and a flow rate of the oxidizing gas before the oxidizing gas is transferred to be pressurized by the oxidizing gas pressurization unit 2.

Although not shown in drawings, the gas supply unit (not shown) may be an ozone generator in case of using an ozone gas or a unit for supplying chlorine that has reacted with manganese dioxide in case of using a chlorine gas.

The oxidizing gas storage unit 1 may include an oxidizing gas storage tank 11, a pressure sensor 12, a safety valve 13 and a gas decomposing device (not shown).

According to one embodiment of the present invention, the oxidizing gas storage unit 1 may control the inner pressure of the oxidizing gas storage tank 11 by mechanically opening the safety valve 13 based on the detection results of the pressure sensor 12.

According to another embodiment of the present invention, the oxidizing gas storage unit 1 may control a flow rate of the oxidizing gas transferred to the oxidizing gas pressurization unit 2 based on the inner pressure of the oxidizing gas storage tank 11 detected by the pressure sensor 12. If the inner pressure is equal to or higher than a standard safety value, the safety valve 13 may be opened to discharge a gas into the gas decomposing device (not shown).

That is, the inner pressure of the oxidizing gas storage tank 11 is detected by the pressure sensor 12. If the detected pressure obtained by analyzing the detected signals is higher than a standard pressure, the flow rate of the oxidizing gas transferred to the oxidizing gas pressurization unit 2 is increased. On the other hand, if the detected pressure is lower than the standard pressure, the flow rate of the oxidizing gas transferred to the oxidizing gas pressurization unit 2 is decreased.

Further, if the inner pressure increases to be equal to or higher than the standard safety value, for protection of the gas supply unit (not shown), the safety valve 13 may be opened to quickly discharge a gas into the gas decomposing device (not shown) such that the gas is decomposed, and operations of the gas supply unit (not shown) and the oxidizing gas pressurization unit 2 may be stopped.

Although the inner pressure of the oxidizing gas storage tank 11 is controlled by controlling the flow rate of the oxidizing gas transferred to the oxidizing gas pressurization unit 2 based on the signal detection results of the pressure sensor 12 in this embodiment, the inner pressure of the oxidizing gas storage tank 11 may be controlled in another manner in another embodiment of the present invention.

For example, in case of supplying an ozone gas into the oxidizing gas storage tank 11, if the inner pressure of the oxidizing gas storage tank 11 is equal to or higher than the standard pressure, a flow rate of the ozone gas generated from the ozone generator (not shown) is automatically decreased. Thus, the inner pressure of the oxidizing gas storage tank 11 can be stabilized constantly without an additional control of flow rate into the oxidizing gas pressurization unit based on the signals of the pressure sensor.

As another example, in case of using a chlorine gas, if the inner pressure of the oxidizing gas storage tank 11 is equal to or higher than the standard pressure, a gas supply amount may be decreased to stabilize the inner pressure.

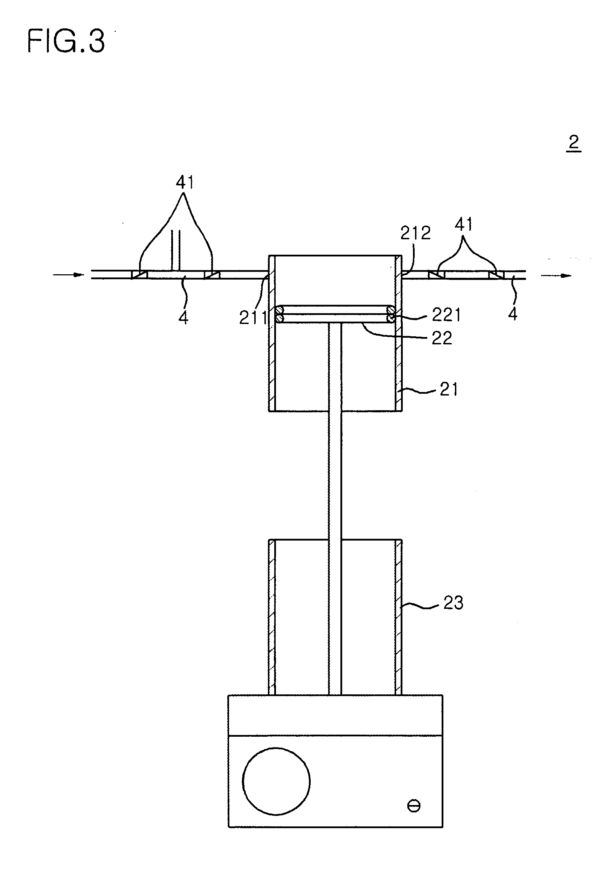

As shown in FIG. 3, the oxidizing gas pressurization unit 2 is supplied with the oxidizing gas from the oxidizing gas storage unit 1. Then, the oxidizing gas pressurization unit 2 pressurizes the oxidizing gas at a high pressure and discharges the oxidizing gas.

The oxidizing gas pressurization unit 2 includes a gas inlet port 211, a gas outlet port 212, and a gas line 4 connected to the gas inlet port 211 and the gas outlet port 212. The oxidizing gas pressurization unit 2 further includes a main body 21 having an inner space, a piston 22 which reciprocates in the main body 21 to pressurize a fluid, and a piston driving device 23 for controlling the reciprocation of the piston 22.

Further, the piston 22 may have piston rings 221 made of an oxidation-resistant material having a resistance against oxidation, for example, fluorine resin. In this embodiment, the piston rings 221 are made of fluorine resin, but the material of the piston rings 221 is not limited thereto.

In this case, the main body 21 and the piston 22 are formed of materials having a resistance against oxidation of the oxidizing gas to prevent corrosion due to oxidation. For example, materials of the main body 21 and the piston 22 includes stainless steel (STS) 304 to 316, preferably, STS 316L and fluorine resin. The materials of the main body 21 and the piston rings 221 are limited thereto.

The piston driving device 23 controls the reciprocation of the piston 22 using various methods such as a mechanical, hydraulic or pneumatic method.

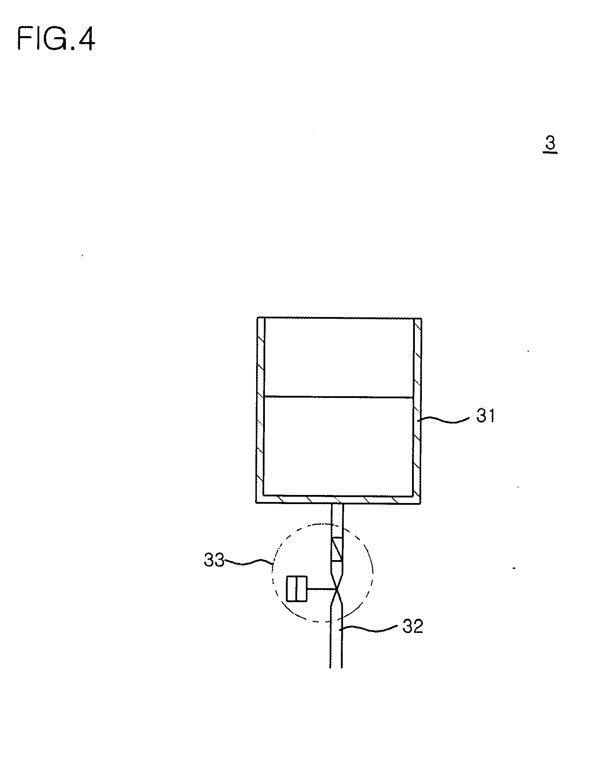

As shown in FIG. 4, the cooling water supply unit 3 supplies protective cooling water serving as a protective film against the oxidizing pas provided into the oxidizing gas pressurization unit 2. The cooling water supply unit 3 may include a cooling water storage tank 31, a line 32 and an electric valve 33.

That is, the cooling water supply unit 3 supplies protective cooling water into the oxidizing gas pressurization unit 2. The supplied protective cooling water serves as a protective film on the inner surface of the main body 21 in contact with the piston rings 221. Thus, it is possible to prevent an inner material of the main body 21 from being corroded due to the oxidizing gas.

Further, the supplied protective cooling water cools the heat generated in the main body 21. Accordingly, in case of using ozone as the oxidizing gas, it is possible to prevent ozone from being decomposed due to heat.

In this case, the electric valve 33 of the cooling water supply unit 3 controls the transfer of cooling water provided into the oxidizing gas pressurization unit 2.

Although the cooling water stored in the cooling water storage tank 31 is supplied in this embodiment, the cooling water may be supplied directly to the oxidizing gas pressurization unit 2 through a line (not shown) connected the oxidizing gas pressurization unit 2 based on control signals of the electric valve 33 without using the cooling water storage tank in another embodiment.

On the other hand, a plurality of check valves 41 are disposed in the gas line 4 at inlet and outlet ends of the oxidizing gas pressurization unit 2. Each of the check valves 41 at the inlet and outlet ends is opened or closed, thereby enabling the smooth transfer of the ozone gas and preventing a backflow of the ozone gas.

Hereinafter, a pressurized gas supply method using the oxidizing gas pressurization system according to the present invention will be described briefly.

First, the oxidizing gas is provided into the oxidizing gas storage tank 11 from the gas supply unit (not shown).

As described above, the inner pressure of the oxidizing gas storage tank 11 is detected by the pressure sensor 12. The inner pressure is controlled based on the detection results.

For example, if the pressure detected by the pressure sensor 12 is higher than the standard pressure, the piston driving device 23 controls the operation of the piston 22 to control a reciprocation rate and a movement distance of the piston 22, thereby increasing the transfer amount of the oxidizing gas.

On the other hand, if the detected pressure is lower than the standard pressure, the transfer amount of the oxidizing gas is decreased by an operation control of the piston driving device 23.

That is, if the inner pressure of the oxidizing gas storage tank 11 is high, the discharge amount of the pressurized gas is increased to decrease the inner pressure of the oxidizing gas storage tank 11.

On the other hand, if the inner pressure of the oxidizing gas storage tank 11 is low, the discharge amount of the pressurized gas is decreased to maintain the inner pressure of the oxidizing gas storage tank 11 to be equal to or higher than a predetermined pressure.

As another example, if the pressure detected by the pressure sensor 12 is higher than the standard pressure, a gas flow rate provided into the oxidizing gas storage tank 11 from the gas supply unit (not shown) may be decreased to stabilize the inner pressure of the oxidizing gas storage tank 11.

Further, if the inner pressure of the oxidizing gas storage tank 11 is equal to or higher than the standard safety value, the safety valve 13 may be opened to discharge the gas into the gas decomposing device (not shown) such that the gas is decomposed.

Meanwhile, when the piston 22 is moved down, the electric valve 33 is opened to supply a specified amount of protective cooling water into the main body 21 such that the protective cooling water serves as a protective film on the inner surface of the main body 21 in contact with the piston rings 221.

When a predetermined amount of the oxidizing gas is supplied into the gas line 4 close to the gas inlet port 211, the check valves 41 close to the gas inlet port 211 are opened such that the oxidizing gas is introduced into the main body 21.

Then, when the oxidizing gas is introduced into the main body 21, the piston 22 is moved up.

Then, the check valves 41 close to the gas inlet port 211 are closed, whereas the check valves 41 close to the gas outlet port 212 are opened. That is, as the piston 22 is moved up, a pressurized oxidizing gas is discharged.

In this case, since the check valves 41 close to the gas inlet port 211 are closed, the backflow of the oxidizing gas is prevented.

According to the above-described sequential process, the oxidizing gas pressurized at a high pressure is continuously transferred, whereby a large amount of the oxidizing gas can be transferred.

Further, as the protective cooling water is supplied, the protective cooling water flowing on the inner surface of the main body of the oxidizing gas pressurization unit serves as a protective film for the piston rings. Accordingly, it is possible to prevent corrosion of the main body due to the oxidizing gas that is pressurized at a high pressure and has strong oxidizing power. Thus, the oxidizing gas pressurized at a high pressure can be transferred.

That is, conventionally, it is difficult to pressurize an ozone gas at a pressure of 3 atm or more. However, in this embodiment, it is possible to pressurize an ozone gas at a high pressure of 3 atm or more.

Further, in case of using an ozone gas, the protective cooling water cools heat generated due to the reciprocation of the piston, thereby preventing ozone from being decomposed due to heat.

As described above, according to the present invention, protective cooling water is supplied into the oxidizing gas pressurization unit such that the protective cooling water serves as a protective film on the inner surface of the oxidizing gas pressurization unit in contact with piston rings, thereby preventing the surface from being oxidized due to strong oxidizing power of the oxidizing gas pressurized at a high pressure. Thus, it is possible to supply the oxidizing gas pressurized at a high pressure and improve efficiency of water treatment using the oxidation process.

Further, according to the present invention, protective cooling water is supplied to cool the heat generated due to reciprocation of the piston in the oxidizing gas pressurization unit, thereby preventing ozone from being decomposed due to heat. Thus, it is possible to increase oxidation efficiency, thereby reducing equipment and maintenance costs.

Further, according to the present invention, the cooling water serves as a buffer film on the inner surface of the oxidizing gas pressurization unit, thereby preventing mechanical abrasion of the piston.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. An oxidizing gas pressurization system for pressurizing and supplying an oxidizing gas such as ozone and chlorine comprising:
an oxidizing gas storage unit;
an oxidizing gas pressurization unit for pressurizing the oxidizing gas supplied from the oxidizing gas storage unit at a high pressure and discharging the oxidizing gas; and
a cooling water supply unit for supplying protective cooling water serving as a protective film against the oxidizing pas supplied into the oxidizing gas pressurization unit.

2. The oxidizing gas pressurization system according to claim 1, wherein the oxidizing gas pressurization unit includes:
a main body having a gas inlet port and a gas outlet port;
a piston which reciprocates in the main body to pressurize a fluid;
piston rings disposed at side portions of the piston; and
a piston driving device for controlling reciprocation of the piston.

3. The oxidizing gas pressurization system according to claim 2, wherein the piston rings are made of fluorine resin.

4. The oxidizing gas pressurization system according to claim 1, wherein the oxidizing gas storage unit includes an oxidizing gas storage tank, a pressure sensor, a safety valve and a gas decomposing device such that an inner pressure of the oxidizing gas storage tank is detected by the pressure sensor and the inner pressure of the oxidizing gas storage tank is controlled by controlling a flow rate of the oxidizing gas transferred into the oxidizing gas pressurization unit and opening/closing of the safety valve based on detection results.
